# EUROPEAN PATENT APPLICATION

(11) **EP 4 538 135 A1**
(43) Date of publication of application: **16.04.2025**
(21) Application number: 23831362.1
(22) Date of filing: 26.06.2023
(51) Int. Cl.: B60W 50/10, B60W 30/10, B60W 40/02, B60W 50/14

(54) **MOBILE BODY, CONTROL METHOD, AND PROGRAM**

(30) Priority: 29.06.2022 JP 2022104881
(71) Applicant: HONDA MOTOR CO., LTD., Minato-ku Tokyo 107-8556 (JP)
(72) Inventor: WAKAYAMA Ryoji, Wako-shi, Saitama 351-0193 (JP); AIZAWA Koki, Wako-shi, Saitama 351-0193 (JP); SHIRAKATA Kento, Wako-shi, Saitama 351-0193 (JP); MATSUNAGA Hideki, Wako-shi, Saitama 351-0193 (JP)
(74) Representative: Kiwit, Benedikt
(86) International application number: PCT/JP2023/023515
(87) International publication number: WO 2024/004920

(57) **Abstract**

A mobile object which an occupant is able to get in includes: a drive device configured to move the mobile object; a sensing device configured to sense a situation in at least a traveling direction of the mobile object; an operator provided in an armrest of the mobile object, capable of being operated at least to right and left, and used for the occupant to indicate the traveling direction of the mobile object; and a control device configured to cause the mobile object to travel in a mode in which acceleration/deceleration and steering are automatically performed. The control device automatically generates a target trajectory for changing the traveling direction of the mobile object on the basis of the sensed situation in the traveling direction in accordance with an operation of indicating the traveling direction performed on the operator and controls the drive device such that the mobile object moves along the target trajectory.

## Description

### TECHNICAL FIELD

The present invention relates to a mobile object, a control method, and a program.

### BACKGROUND ART

Recently, measures for providing access to a sustainable transportation system in consideration of persons in vulnerable situations out of traffic participants have been actively taken. For the purpose of realization thereof, research and development for improving the safety and convenience of traffic through research and development associated with automated driving technology has been focused on. For example, automated driving or advanced driving support based on sensing results in a traveling direction of a mobile object has been put into practical use. Such technology can include an aspect in which a control device for a mobile object controls a traveling direction of the mobile object and an aspect in which at least a rough traveling direction is determined by receiving a certain operation from an occupant. Recently, mobile objects called single-seated and double-seated micromobilities have been put into practical use (Patent Document 1).

### Citation List

### Patent Document

Patent Document 1: Japanese Unexamined Patent Application, First Publication No. 2019-197328

### SUMMARY OF INVENTION

### Technical Problem

However, in the related art, a traveling direction of a mobile object may not be able to be changed with a simple operation.

The present invention was made in consideration of the aforementioned circumstances, and an objective thereof is to provide a mobile object, a control method, and a program that can change a traveling direction of a mobile object with a simple operation. This will ultimately contribute to the development of sustainable transportation systems. Solution to Problem

A mobile object according to the present invention employs the following configurations.
(1) A mobile object according to an aspect of the present invention is a mobile object which an occupant is able to get in, the mobile object including: a drive device configured to move the mobile object; a sensing device configured to sense a situation in at least a traveling direction of the mobile object; an operator provided in an armrest of the mobile object, capable of being operated at least to right and left, and used for the occupant to indicate the traveling direction of the mobile object; and a control device configured to cause the mobile object to travel in a mode in which acceleration/deceleration and steering are automatically performed, wherein the control device automatically generates a target trajectory for changing the traveling direction of the mobile object on the basis of the sensed situation in the traveling direction in accordance with an operation of indicating the traveling direction performed on the operator and controls the drive device such that the mobile object moves along the target trajectory.
(2) In the aspect of (1), the control device generates the target trajectory with a first direction as the traveling direction to which a change is to be made when an operating direction of the operator is the first direction which is one of right and left, and the control device cancels change of the traveling direction when the operator is operated in a direction different from the first direction after the first direction has been determined as the traveling direction to which a change is to be made.
(3) In the aspect of (2), the control device generates the target trajectory with a first direction as the traveling direction to which a change is to be made when the operator has been operated in the first direction which is one of right and left in a first period of time or longer, the control device cancels change of the traveling direction when the operator is operated in a direction different from the first direction in a second period of time or longer after the first direction has been determined as the traveling direction to which a change is to be made, and the second period is longer than the first period.
(4) In the aspect of (2), the operator is able to be additionally operated at least rearward, the control device generates the target trajectory with a first direction as the traveling direction to which a change is to be made when the operator has been operated in the first direction in a first period of time or longer, the control device cancels change of the traveling direction when the operator is operated rearward in a third period of time or longer or the operator is operated in a direction other than the first direction and the rearward direction in a second period of time or longer after the first direction has been determined as the traveling direction to which a change is to be made, and the third period is shorter than the second period.
(5) In the aspect of (1), the mobile object includes a notification device configured to notify the occupant, and the control device causes the notification device to output a notification indicating that an operation on the operator has been received when the operation has been received.
(6) In the aspect of (1), the control device maintains an instruction to change the traveling direction when the mobile object is stopped or a speed of the mobile object becomes equal to or lower than a predetermined value with interruption of the occupant while the mobile object is moving along the target trajectory.
(7) In the aspect of (1), the mobile object includes a notification device configured to notify the occupant, and the control device causes the notification device to notify the occupant that an operation of cancelling an instruction to change the traveling direction is to be performed when the mobile object stops due to interruption of the occupant while the mobile object is moving along the target trajectory.
(8) In the aspect of (1), the control device determines one of a plurality of course change destination candidates as the traveling direction to which a change is to be made by receiving a plurality of operations on the operator when the plurality of course change destination candidates have been sensed in the traveling direction of the mobile object by the sensing device.
(9) In the aspect of (1), the control device determines one of a plurality of course change destination candidates as the traveling direction to which a change is to be made by detecting one or more of a traveling history, speech, a sight line, and a gesture of the occupant when the plurality of course change destination candidates have been sensed in the traveling direction of the mobile object by the sensing device.
(10) In the aspect of (8), the mobile object includes a display device configured to display information on traveling of the mobile object, and the control device causes the display device to display one of the plurality of course change destination candidates which is determined as the traveling direction to which a change is to be made.
(11) A control method according to another aspect of the present invention is a control method that is performed by a control device for a mobile object, the control device including a drive device configured to move the mobile object which an occupant is able to get in, a sensing device configured to sense a situation in at least a traveling direction of the mobile object, an operator provided in an armrest of the mobile object, capable of being operated at least to right and left, and used for the occupant to indicate the traveling direction of the mobile object, and a control device configured to cause the mobile object to travel in a mode in which acceleration/deceleration and steering are automatically performed, the control method including: automatically generating a target trajectory for changing the traveling direction of the mobile object on the basis of the sensed situation in the traveling direction in accordance with an operation of indicating the traveling direction performed on the operator; and controlling the drive device such that the mobile object moves along the target trajectory.
(12) A program according to another aspect of the present invention is a program that is executed by a control device for a mobile object, the control device including a drive device configured to move the mobile object which an occupant is able to get in, a sensing device configured to sense a situation in at least a traveling direction of the mobile object, an operator provided in an armrest of the mobile object, capable of being operated at least to right and left, and used for the occupant to indicate the traveling direction of the mobile object, and a control device configured to cause the mobile object to travel in a mode in which acceleration/deceleration and steering are automatically performed, the program causing the control device to perform: automatically generating a target trajectory for changing the traveling direction of the mobile object on the basis of the sensed situation in the traveling direction in accordance with an operation of indicating the traveling direction performed on the operator; and controlling the drive device such that the mobile object moves along the target trajectory.

### Advantageous Effects of Invention

According to the aspects of (1) to (12), it is possible to change a traveling direction of a mobile object with a simple operation.

### BRIEF DESCRIPTION OF DRAWINGS

[FIG. 1] A diagram illustrating an example of a configuration of a mobile object 1.
[FIG. 2] A perspective view of a mobile object 1 according to a first embodiment when seen from above.
[FIG. 3] A view of a state in which a right door D_r is open when seen from the inside of the mobile object 1.
[FIG. 4] A diagram illustrating an example of an image IM captured by an external camera of an external sensing device 10.
[FIG. 5] A diagram illustrating a target trajectory K before and after a first operator OP1 is operated.
[FIG. 6] A diagram illustrating an example of an operation of the first operator OP1 that is performed to cancel change of a traveling direction of the mobile object 1.
[FIG. 7] A diagram illustrating an example of a notification screen that is displayed by an HMI30.
[FIG. 8] A diagram illustrating another example of the notification screen that is displayed by the HMI 30.
[FIG. 9] A diagram illustrating an example of a method of designating a traveling direction using the HMI 30 in a multi-branching road.
[FIG. 10] A flowchart illustrating an example of a process flow that is performed by a control device 100.
[FIG. 11] A flowchart illustrating another example of a process flow that is performed by the control device 100.
[FIG. 12] A flowchart illustrating another example of a process flow that is performed by the control device 100.
[FIG. 13] A perspective view of a mobile object 1A according to a second embodiment when seen from above.

### DESCRIPTION OF EMBODIMENTS

Hereinafter, a mobile object, a control method, and a program according to the present invention will be described with reference to the accompanying drawings. A mobile object is a vehicle which an occupant is able to get in and may also be referred to as micromobility. The mobile object may be able to move on a walkway in addition to a roadway. In this case, different types of speed limitation control are performed on a roadway and a walkway, and the outside may be notified of information indicating that the mobile object is moving on a walkway using a certain means when the mobile object is moving on the walkway. In this specification, description of this case will be omitted, and it is assumed that the mobile object moves on only a roadway.

### <First embodiment>

### [Configuration]

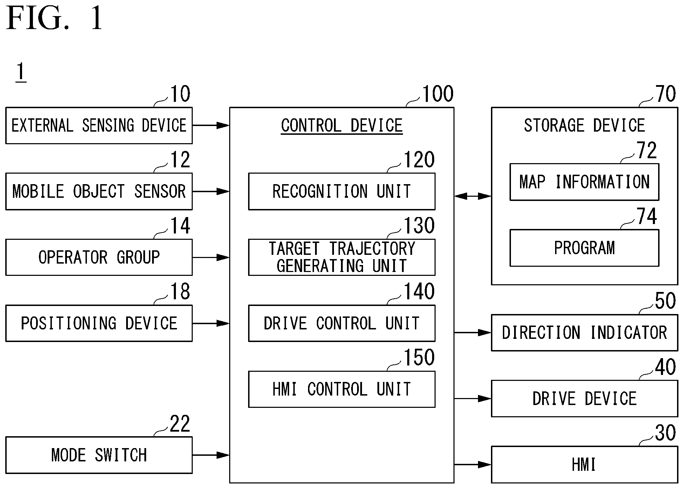

FIG. 1 is a diagram illustrating an example of a configuration of a mobile object 1. For example, an external sensing device 10, a mobile object sensor 12, an operator group 14, a positioning device 18, a mode switch 22, an HMI 30, a drive device 40, a direction indicator 50, a storage device 70, and a control device 100 are mounted in the mobile object 1. Some constituents which are not essential to realization of functions of the present invention out of the constituents may be omitted.

The external sensing device 10 is various devices for acquiring a situation in at least a traveling direction of the mobile object 1. The external sensing device 10 is an example of a detection device. The external sensing device 10 includes, for example, an external camera. The external sensing device 10 may include a radar device, a Light Detection and Ranging (LIDAR) device, and a sensor fusion device. The external sensing device 10 outputs information (such as an image or a position of an object) indicating sensing results to the control device 100.

The mobile object sensor 12 includes, for example, a speed sensor, an acceleration sensor, a yaw rate (angular velocity) sensor, a direction sensor, and operation amount sensors attached to various operators included in the operator group 14.

The positioning device 18 is a device that measures a position of the mobile object 1. The positioning device 18 is, for example, a global navigation satellite system (GNSS) receiver, identifies the position of the mobile object 1 on the basis of signals received from GNSS satellites, and outputs the identified position as position information. The position information of the mobile object 1 may be estimated from a position of a Wi-Fi base station to which a communication device which will be described later is connected.

The mode switch 22 is a switch that is operated by an occupant. The mode switch 22 may be a mechanical switch or a graphical user interface (GUI) switch that is set on a touch panel. The mode switch 22 is a switch for instructing to switch a driving mode. The driving mode that is able to be performed by the mobile object 1 includes at least mode A in which acceleration/deceleration is automatically controlled and steering is controlled on the basis of a simple operation on a first operator OP1 which will be described later. In addition, the driving mode may include mode B in which acceleration/deceleration is automatically controlled and steering is controlled on the basis of an operation on a second operator OP2. The driving mode may include a driving mode to which modes A and B are changed such that acceleration/deceleration is controlled on the basis of a manual operation. In the following description, only modes A and B will be described.

The HMI 30 is provided in a cabin of the mobile object (which typically means a closed space in which an occupant is located or which may mean a space surrounding a seat when the mobile object 1 is of an open car type). The HMI 30 includes, for example, a display device, a speaker, and a touch panel.

The drive device 40 is a device for causing the mobile object 1 to move on a road. The drive device 40 includes, for example, a wheel group including turning wheels and driving wheels, a motor that drives the driving wheels, a battery that stores electric power to be supplied to the motor, and a steering device that adjusts a steering angle of the turning wheels. The drive device 40 may include an internal combustion engine or a fuel cell as a drive force output means or a power generation means. The drive device 40 may further include a brake device using a frictional force or air resistance.

The direction indicator 50 is provided on an external plate member of the mobile object 1 and notifies the outside of the mobile object 1 of course change of the mobile object 1 through blinking of a lamp.

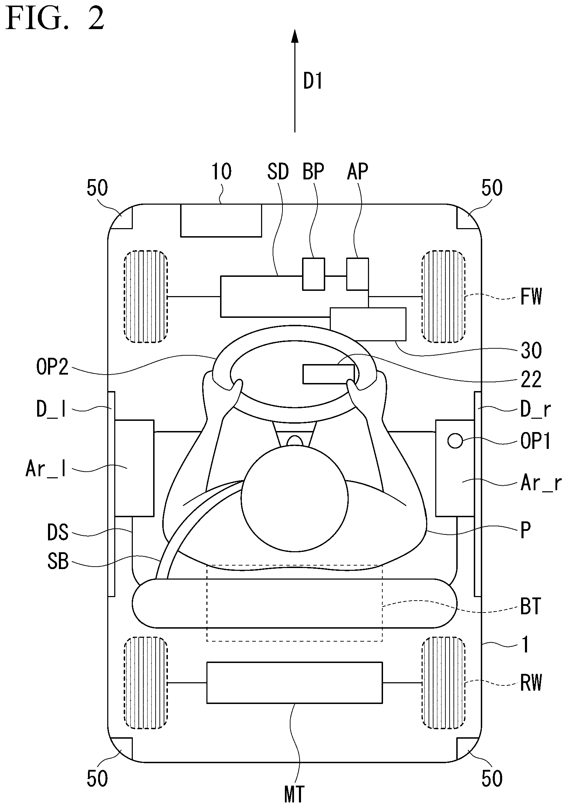

FIG. 2 is a perspective view of the mobile object 1 according to the first embodiment when seen from above. In the drawing, FW denotes turning wheels, RW denotes driving wheels, SD denotes a steering device, MT denotes a motor, and BT denotes a battery. The steering device SD, the motor MT, and the battery BT are included in the drive device 40. AP denotes an accelerator pedal and BP denotes a brake pedal, which are included in the operator group 14. When acceleration/deceleration is necessarily automatically controlled, at least the accelerator pedal AP may be omitted. The mobile object 1 illustrated in the drawing is a single-seated mobile object, and an occupant P sits on a driver's seat and wears a safety belt SB. An arrow D1 is a traveling direction (a velocity vector) of the mobile object 1. The external sensing device 10 is provided in the vicinity of a front end of the mobile object 1, and the mode switch 22 is provided in a boss part of a steering wheel WH. The direction indicator 50 is provided at four corners of the mobile object 1.

### [First operator]

For example, a left door D_l and a right door D_r are provided in the mobile object 1 such that an occupant can get in and off on both the left and right sides. A left armrest Ar_l is provided inside of the left door D_l, and a right armrest Ar-r is provided inside of the right door D_r. A first operator OP1 is provided in the right armrest Ar_r out of these armrests. This arrangement is an arrangement when a delivery destination of the mobile object 1 is a left-handed traffic country or region. When the delivery destination of the mobile object 1 is a right-handed traffic country or region, the first operator OP1 is provided in the left armrest Ar_l. This arrangement is based on the assumption that an occupant often gets in and off the mobile object 1 on a walkway side, that is, on the left side, when the occupant gets in and off the mobile object 1 stopping at a left end of a roadway in a left-handed traffic country or region. When the first operator OP1 is provided in a door on the side on which an occupant P gets in and off the mobile object 1, there is a likelihood that the first operator OP1 will be hooked to a body or clothing of the occupant at the time of getting in and off, and thus the first operator OP1 is provided in the right armrest Ar_r provided in the right door D_r which is less used for getting in and off. The arrangement in the right-handed traffic is opposite thereto. That is, the armrest with the first operator OP1 is provided inside of a door opposite to the side on which the mobile object 1 is regulated to pass by the Act out of two doors provided on the right and left sides of the mobile object 1.

The first operator OP1 receives, for example, discrete operations (operations including only two states of an ON operation and an OFF operation regarding a certain instruction). The first operator OP1 has a shape of a joystick, a cross key, or the like. In the present invention, the first operator OP1 has only to be operated to at least the right side and the left side. When the first operator OP1 is a joystick and is operated to one of the right and left sides by a predetermined amount or more, an operation amount sensor attached to the first operator OP1 outputs a signal indicating that "the first operator has been operated to one of the right and left sides" to the control device 100.

A second operator OP2 may be provided in a part in front of the occupant P in the mobile object 1. The second operator OP2 has a shape of a so-called steering wheel (which is not limited to a wheel shape but may be a different shape) and is used to manually operate a traveling direction (a steering angle) of the mobile object 1. The second operator OP2 receives, for example, continuous operations. A rotation angle sensor and/or a torque sensor is attached as an operation amount sensor to the second operator OP2, and these sensors detect an amount of operation (or an operation force) performed by the occupant P and outputs the detected amount of operation to the control device 100.

The first operator OP1 is provided behind the second operator OP2 in the traveling direction D1 of the mobile object 1. This is because traveling control of the mobile object 1 based on the operation of the first operator OP1 is performed to be closer to automated driving (with a high degree of driving support), and thus it is assumed that the occupant P adopts a relaxed posture. On the other hand, when the second operator OP2, the operation is manually performed in association with at least steering, and thus it is assumed that the occupant P adopts a posture more tilted forward. By employing this arrangement, it is possible to appropriately receive a driving operation according to the state of the occupant P.

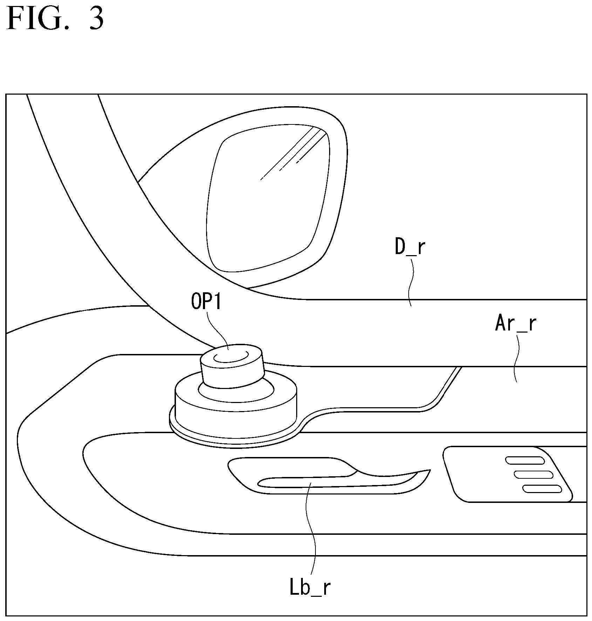

An opening/closing operator for opening/closing a door is provided in each of the left door D_l and the right door D_r. FIG. 3 is a view of the state in which the right door D_r is open when seen from the inside of the mobile object 1. In the drawing, Lb_r denotes a right opening/closing operator. The first operator OP1 is provided at a position at which it does not overlap the right opening/closing operator Lb_r in a side view. Accordingly, it is possible to curb occurrence of a situation in which the occupant P unconsciously erroneously operates the right opening/closing operator Lb_r. When the occupant P operates the right opening/closing operator Lb_r, it is possible to curb occurrence of a situation in which the occupant P unconsciously erroneously the first operator OP1.

Referring back to FIG. 1, the storage device 70 is a non-transitory storage device such as a hard disk drive, a flash memory, or a random access memory (RAM). Map information 72, programs 74 that are executed by the control device 100, and the like are stored in the storage device 70. In the drawing, the storage device 70 is illustrated outside of the frame of the control device 100, but the storage device 70 may be included in the control device 100. The storage device 70 may be provided in a server which is not illustrated. The map information 72 may not be stored.

### [Control device]

The control device 100 includes, for example, a recognition unit 120, a target trajectory generating unit 130, a drive control unit 140, and an HMI control unit 150. These constituent units are realized, for example, by causing a hardware processor such as a central processing unit (CPU) to execute the program (software) 74. Some or all of these constituent units may be realized by hardware (a circuit unit including circuitry) such as a large scale integration (LSI) device, an application-specific integrated circuit (ASIC), a field-programmable gate array (FPGA), or a graphics processing unit (GPU) or may be cooperatively realized by software and hardware. The program may be stored in the storage device 70 in advance or may be stored in a detachable storage medium (a non-transitory storage medium) such as a DVD or a CD-ROM and installed in the storage device 70 by setting the storage medium into a drive device.

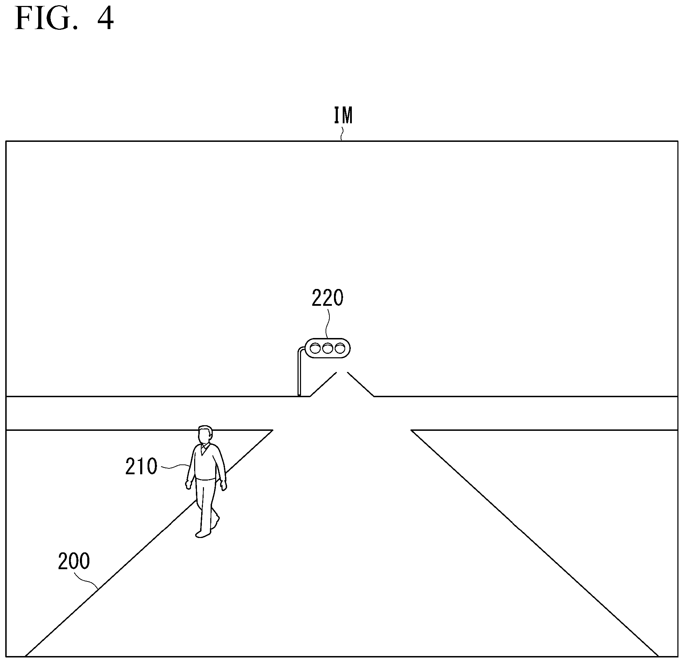

The recognition unit 120 recognizes a type, a position, or the like of an object in at least the traveling direction of the mobile object 1 on the basis of information input from the external sensing device 10. FIG. 4 is a diagram illustrating an example of an image IM captured by an external camera of the external sensing device 10. The recognition unit 120 recognizes a lane boundary 200, a pedestrian 210, a state of a traffic signal 220, another vehicle which is not illustrated, and the like. The lane boundary 200 includes a road marking, curbstones, a step, and a guardrail and is an outer edge line of an area in which the mobile object 1 can travel. The recognition unit 120 recognizes a position and a type of an object in the image IM by inputting the image IM to a trained model for recognizing a type of an object.

The target trajectory generating unit 130 projects, for example, an object recognized in the image IM onto a virtual plane when seen from above and generates a target trajectory along which the mobile object 1 is to travel on the virtual plane. For example, the target trajectory generating unit 130 generates the target trajectory such that the mobile object 1 travels at the center in a width direction of the lane boundaries in principle and avoid contact with a pedestrian or another vehicle when the pedestrian or the other vehicle is present. At this time, the target trajectory generating unit 130 sets a distribution of risk values which are index values for avoid a contact in the vicinity of the lane boundaries or the object and generates the target trajectory such that the mobile object passes through a point with a low risk value. The target trajectory may be generated to include a speed element or the target trajectory may be generated such that the mobile object 1 stops automatically when a traffic signal indicates impassability. Acceleration/deceleration control associated therewith may be performed by the drive control unit 140.

The drive control unit 140 controls the drive device 40 such that the mobile object 1 travels along the target trajectory. Control details of the drive control unit 140 are known, and thus detailed description thereof will be omitted.

The HMI control unit 150 controls the HMI 30 such that the occupant P is notified of the state of the mobile object 1.

### [Control based on operation of first operator]

The target trajectory generating unit 130 generates a target trajectory such that the mobile object 1 moves while maintaining a current lane (so-called "along a road") on the basis of the aforementioned guideline when the first operator OP1 is not operated. When the first operator OP1 is operated to one of the right and left sides, the target trajectory generating unit 130 generates the target trajectory such that the mobile object 1 automatically turns to one of the right and left sides (turns right or left). In the following description, it is assumed that the first operator OP1 is operated to the right side. The target trajectory generating unit 130 searches for a lane closest to the mobile object 1 out of right-turn lanes as a lane crossing the lane along which the mobile object 1 is currently traveling at a time point at which the first operator OP1 has been operated to the right side. A right-turn lane is a lane which is not too close to the mobile object 1 (for example, a distance from the mobile object 1 in a longitudinal direction of the lane in which the mobile object is currently traveling is equal to or greater than a predetermined distance). That is, when there is a sufficient margin of distance for turning to right and there is a lane crossing the lane on which the mobile object is currently traveling, the target trajectory generating unit 130 generates a target trajectory such that the mobile object 1 turns right onto that lane.

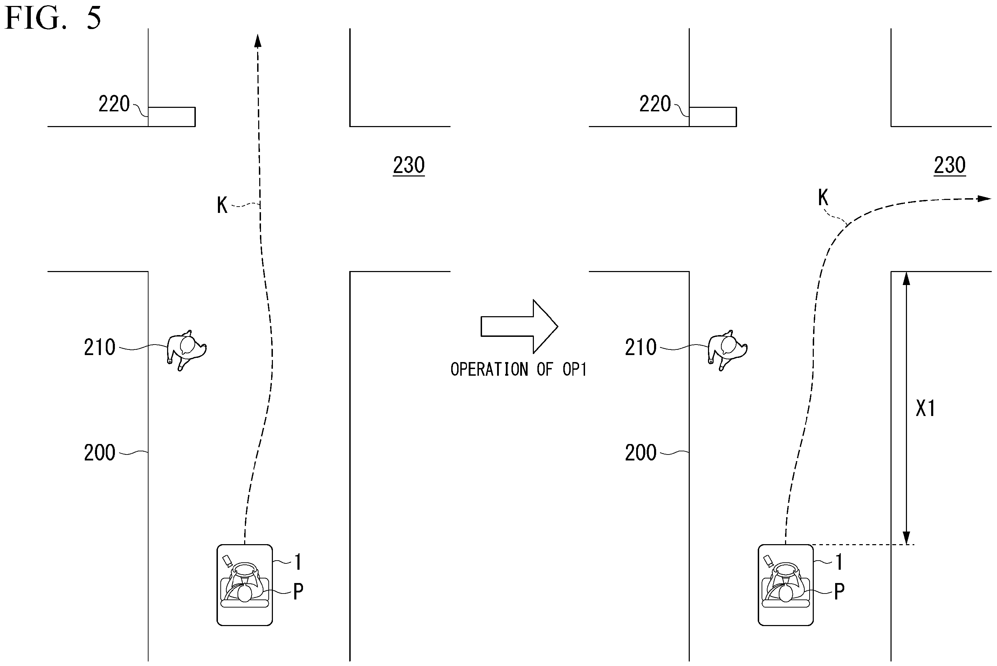

FIG. 5 is a diagram illustrating a target trajectory K before and after the first operator OP1 is operated. As illustrated in the drawing, when the first operator OP1 is operated, it is first ascertained whether a distance X1 from a lane 240 extending to right is equal to or greater than a margin distance, and the target trajectory K is changed to a course for entering the lane 240 when the distance X1 is equal to or greater than the margin distance. At this time, the target trajectory generating unit 130 and the drive control unit 140 cause the mobile object 1 to travel along the target trajectory K while automatically performing deceleration required for right turn. Control for right turn is illustrated in FIG. 5, but the target trajectory generating unit 130 may determine that lane change is instructed and cause the mobile object 1 to change a lane when the first operator OP1 is operated to one of the right and left sides and there is a right-turn or left-turn lane within a predetermined distance.

When the traveling direction of the mobile object 1 is determined by an operation on the second operator OP2, so-called manual steering is performed, and thus the target trajectory generating unit 130 stops its operation (acceleration/deceleration control may be automatically performed). When the second operator OP2 is operated while mode A is being performed, it may be determined that the occupant P expresses an intention of manual driving, the target trajectory generating unit 130 may stop its operation, and the mode may transition to mode B in which a steering operation is manually performed.

### [Change of traveling direction based on operation of first operator]

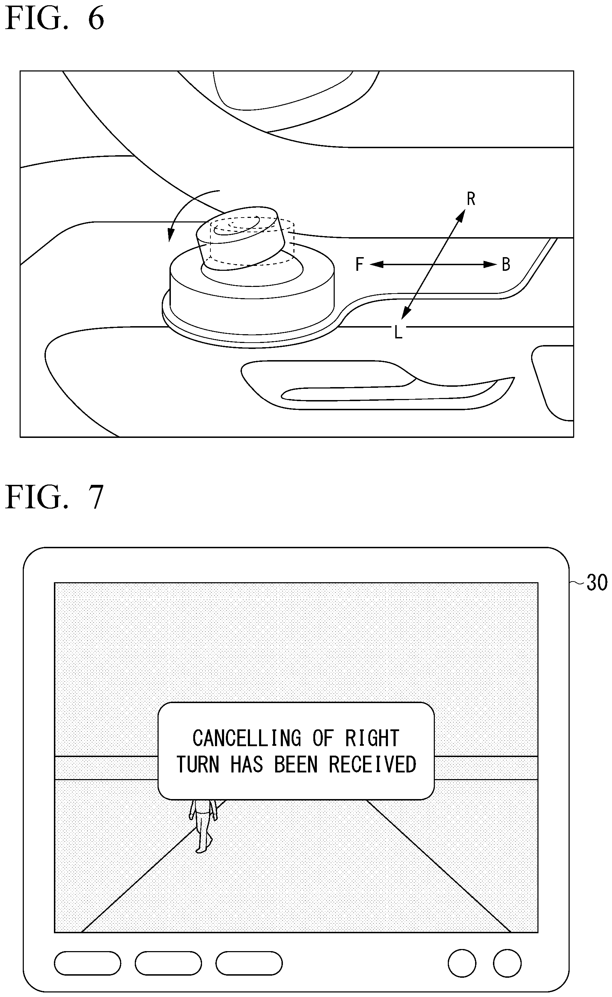

When the first operator OP1 is operated to one of the right and left sides to determine a traveling direction to which a change is to be made and then the first operator OP1 is operated in a direction other than the traveling direction to which a change is to be made, the target trajectory generating unit 130 cancels the change of the traveling direction. FIG. 6 is a diagram illustrating an example of an operation of the first operator OP1 that is performed to cancel change of the traveling direction of the mobile object 1. In FIG. 6, reference signs R, F, L, and B denote rightward, forward, leftward, and rearward of the mobile object 1, respectively. FIG. 6 illustrates a situation in which the first operator OP1 is operated forward (that is, in the direction F) in a state in which the first operator OP1 is operated rightward (that is, in the direction R) to generate a target trajectory K for right turn.

In the situation illustrated in FIG. 6, the target trajectory generating unit 130 cancels he rightward change of the traveling direction with the operation of the first operator OP1 from rightward to forward. In this case, for example, the target trajectory generating unit 130 regenerates a target trajectory for passing forward through the crossing point illustrated in FIG. 5 instead of the target trajectory K for turning to right at the crossing point. Canceling of the change of the traveling direction is not limited to the forward operation, and the change of the traveling direction may be cancelled, for example, when the first operator OP1 is operated leftward (that is, in the direction L) or rearward (in the direction B). In this case, the target trajectory generating unit 130 may re-generate a target trajectory corresponding to the operated direction for the cancelling.

Here, when the first operator OP1 is operated in a direction other than the traveling direction to which a change is to be made and thus the target trajectory is instantaneously cancelled, the target trajectory is cancelled even when the operation is an erroneous operation, which is inconvenient for the occupant P. Accordingly, the target trajectory generating unit 130 sets an operation period of the first operator OP1 for cancelling the change of the traveling direction to be longer than the operation period of the first operator OP1 for accepting the change of the traveling direction. By setting the period for determining cancelling of the change of the traveling direction to be longer in this way, it is possible to curb occurrence of cancelling of the change of the traveling direction due to an erroneous operation of the occupant P.

The target trajectory generating unit 130 may set the period for determining cancelling of the change of the traveling direction by allowing the occupant P to operate the first operator OP1 rearward to be shorter than the period for determining cancelling of the change of the traveling direction by allowing the occupant P to operate the first operator OP1 forward. This is because, in general, when the occupant P operates the first operator OP1 rearward, it is assumed that the occupant P has a stronger intention to cancel the change of the traveling direction. More generally, a period for determining cancelling of the change of the traveling direction by allowing the occupant P to operate the first operator OP1 rearward may be set to be shorter than a period for determining cancelling of the change by allowing the occupant to operate the first operator OP1 in a direction other than the rearward direction. By changing the period for determining cancelling of the change according to the operation direction of the first operator OP1 in this way, it is possible to control the mobile object 1 in more detailed consideration of the situation of the occupant P.

### [Feedback of operation of first operator]

As described above, the control device 100 accepts the change of the traveling direction when the first operator OP1 is operated in an operation period for accepting the change of the traveling direction and cancels the change of the traveling direction when the first operator OP1 is operated in an operation period for cancelling the change of the traveling direction. Here, when the operation period elapses and then the occupant P is notified that the operation has been accepted, the occupant P can reliably recognize that the operation of the occupant P has been accepted by the mobile object 1, which improves convenience for the occupant P.

Accordingly, the mobile object 1 may further include a notification device that outputs a notification indicating that the operation has been accepted when the operation period has elapsed and thus the operation on the first operator OP1 has been accepted. The notification device is, for example, a vibration generator that is incorporated into the first operator OP1. When the first operator OP1 has been operated in the operation period for accepting the change of the traveling direction or when the first operator OP1 has been operated in the operation period for cancelling the change of the traveling direction, the control device 100 causes the vibration generator to generate vibration. At this time, the vibration which is generated when the first operator OP1 has been operated in the operation period for accepting the change of the traveling direction or the vibration which is generated when the first operator OP1 has been operated in the operation period for cancelling the change of the traveling direction may be different from each other. Accordingly, the occupant P can reliably recognize that the operation on the first operator OP1 has been accepted by the mobile object 1.

For example, the notification device is not limited to a vibration generator and may be the HMI 30 such as a display provided in the cabin of the mobile object 1. When the first operator OP1 has been operated in the operation period for accepting the change of the traveling direction or when the first operator OP1 has been operated in the operation period for cancelling the change of the traveling direction, the control device 100 displays display information indicating that the operation has been accepted on the HMI 30.

FIG. 7 is a diagram illustrating an example of a notification screen which is displayed by the HMI 30. FIG. 7 illustrates, for example, a screen which is displayed on the HMI 30 when the first operator OP1 has been operated in the operation period for cancelling the change of the traveling direction. At this time, the control device 100 displays display information indicating that canceling of change of the traveling direction has been accepted on the HMI 30. Accordingly, the occupant P can reliably recognize that the operation on the first operator OP1 has been accepted by the mobile object 1.

### [Coping with interruption of occupant]

It is conceivable that an occupant P intend to interrupt traveling of a mobile object 1 by stepping on the brake pedal BP due to various reasons (for example, when the occupant P feels that a traveling direction is different from an intention of the occupant P) when the mobile object 1 is traveling along a target trajectory and the traveling direction is to be changed. Frequent changing of the target trajectory of the mobile object 1 with interruption of the occupant P is not desirable particularly when the mobile object is traveling in a roadway. Accordingly, even when the mobile object 1 has stopped due to interruption of the occupant P, the target trajectory generating unit 130 operates to maintain the accepted instruction to change the traveling direction and not to change the target trajectory.

When the mobile object 1 has stopped due to interruption of the occupant P at the time of changing the traveling direction of the mobile object 1, the control device 100 may cause the HMI 30 to notify of an operation method for canceling out the change of the traveling direction.

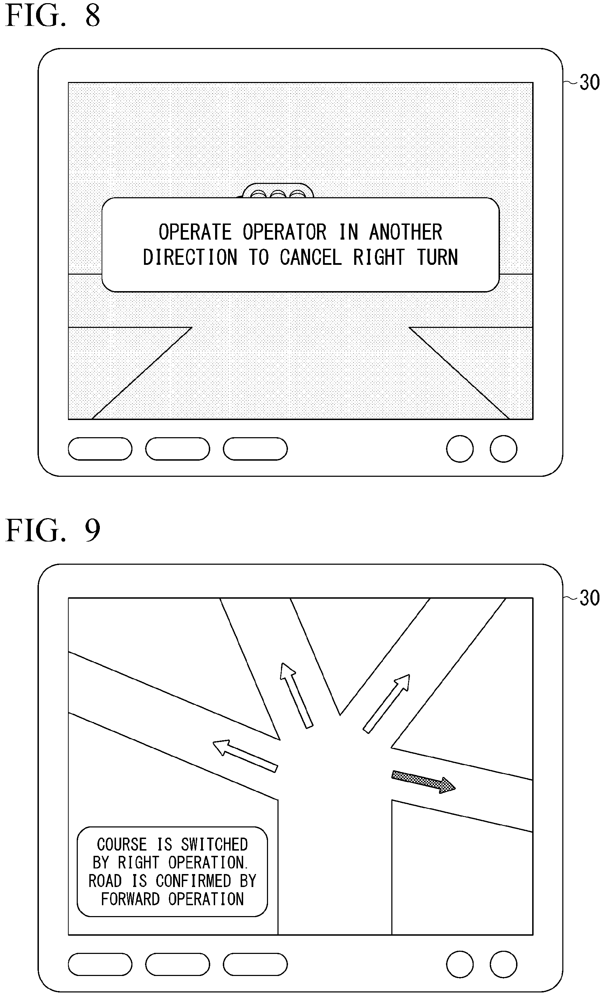

FIG. 8 is a diagram illustrating another example of the notification screen which is displayed on the HMI 30. FIG. 8 illustrates a situation in which the mobile object 1 has stopped due to interruption of the occupant P when the mobile object 1 is turning to right at a crossing point. At this time, the control device 100 displays display information indicating an operation method for canceling out the change of the traveling direction on the HMI 30. Accordingly, the occupant P can recognize a regular procedure for cancelling the change of the traveling direction and use the regular procedure for traveling of the mobile object 1.

### [Determination of traveling direction on multi-branching road]

The operation of the first operator OP1 when the mobile object 1 turns to right or turns to left has been described above. On the other hand, when a road which the mobile object 1 enters has a structure of a multi-branching road, there may be a plurality of (three or more) candidates for the traveling direction, and the traveling direction for the multi-branching road may not be able to be designated only using the method of designating right turn or left turn using the first operator OP1. Accordingly, when a multi-branching road has been detected by inputting an image IM captured by an external camera of the external sensing device 10 to a trained model, the target trajectory generating unit 130 selects one of the plurality of candidates for the traveling direction using the following method and generates a target trajectory based on the traveling direction.

FIG. 9 is a diagram illustrating an example of a method of designating a traveling direction in a multi-branching road using the HMI 30. FIG. 9 illustrates an example in which a mobile object 1 enters a multi-branching road including four candidates for a traveling direction. When a multi-branching road and the number of branches are detected by inputting an image IM captured by the external camera of the external sensing device 10 to a trained model, for example, the target trajectory generating unit 130 displays the multi-branching road and the candidates for the traveling direction on the HMI 30. In the example illustrated in FIG. 9, for example, the target trajectory generating unit 130 displays the detected four candidates for the traveling direction as arrows on the HMI 30 and displays the currently selected candidate for the traveling direction as a dark arrow on the HMI 30.

An occupant P sequentially (for example, clockwise) switches the currently selected candidate for the traveling direction, for example, by operating the first operator OP1 rightward a plurality of times. Thereafter, when an arrow of the traveling direction desired by the occupant is elected, the occupant P confirms the traveling direction to which a change is to be made by operating the first operator OP1 forward. The target trajectory generating unit 130 generates a target trajectory according to the confirmed traveling direction to which a change is to be made and causes the mobile object 1 to travel along the generated target trajectory. Accordingly, even when the mobile object enters a multi-branching road including a plurality of candidates for the traveling direction, the occupant P can select the traveling direction to which a change is to be made with a simple operation.

The method of operating the first operator OP1 for selecting the traveling direction is not limited to the aforementioned method, and a method capable of selecting the traveling direction by operating the first operator OP1 in a predetermined direction a plurality of times can be used in more general. A display mode of the traveling direction is not limited to an arrow, and a mode capable of distinguishing a currently selected candidate for the traveling direction from a plurality of candidates for the traveling direction can be used in more general.

When a candidate for the traveling direction is not selected by the occupant P within a predetermined time after the candidates for the traveling direction in the multi-branching road have been displayed on the HMI 30 or within a predetermined distance from the multi-branching road, the target trajectory generating unit 130 may stop the mobile object 1 or automatically determine a candidate for the traveling direction using a predetermined method. For example, the target trajectory generating unit 130 may select a candidate for the traveling direction with the largest number of times of selection on the basis of the past selection by the occupant P or may select a candidate for the traveling direction with the largest number of times of selection by collecting selection of a plurality of different occupants.

A candidate for the traveling direction may be selected in combination with other information in addition to the direction in which the first operator OP1 is operated. For example, when the first operator OP1 is operated rightward in a multi-branching road illustrated in FIG. 9, the occupant P is considered to select one of two rightward candidates for the traveling directions. Out of these two candidates for the traveling direction, the candidate for the traveling direction with the larger number of times of selection of the occupant P in the past may be selected. A sight line or a gesture such as finger pointing of the occupant P may be detected and a candidate for the traveling direction closer to the direction of the sight line or the direction indicated by the gesture may be selected, or speech such as "first right" or "second road" may be detected and a candidate for the traveling direction in the direction indicated by the speech may be selected. The methods of designating the traveling direction using the traveling history, the speech, the sight line, and the gesture may be used as independent designation methods without using the first operator OP1.

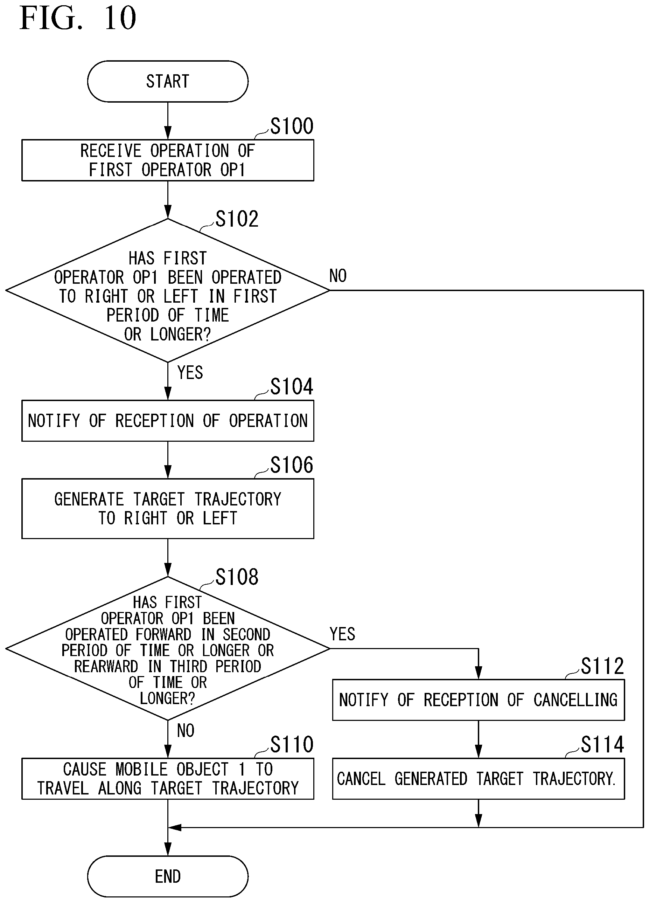

A process flow that is performed by the control device 100 will be described below with reference to FIGS. 10 to 12. FIG. 10 is a diagram illustrating an example of a process flow that is performed by the control device 100. The process flow illustrated in FIG. 10 is repeatedly performed while the mobile object 1 is traveling.

First, the control device 100 receives an operation on the first operator OP1 (Step S100). Then, the control device 100 determines whether the first operator OP1 has been operated in one direction of rightward and leftward in a first period of time or longer (Step S102). When it is determined that the first operator OP1 has not been operated in one direction of rightward and leftward in the first period of time or longer, the control device 100 ends the process flow in the flowchart.

On the other hand, when it is determined that that the first operator OP1 has been operated in one direction of rightward and leftward in the first period of time or longer, the control device 100 causes the notification device to notify of information indicating that the operation has been accepted (Step S104). Then, the control device 100 generates a target trajectory with the designated one direction of rightward and leftward as a traveling direction to which a change is to be made (Step S106). Then, the control device 100 determines whether the first operator OP1 has been operated forward in a second period of time or longer or rearward in a third period of time or longer (Step S108).

When it is determined that the first operator OP1 has been operated forward in the second period of time or longer or has not been operated rearward in the third period of time or longer, the control device 100 causes the mobile object 1 to travel along the generated target trajectory (Step S110). On the other hand, when it is determined that the first operator OP1 has been operated forward in the second period of time or longer or has been operated rearward in the third period of time or longer, the control device 100 causes the notification device to notify of information indicating that the accepted operation is cancelled (Step S112). Then, the control device 100 cancels the generated target trajectory (Step S114). Accordingly, the process flow in the flowchart ends.

In the aforementioned description and flowchart, the second period associated with the forward operation and the third operation associated with the rearward operation are different, but a period common to the forward operation and the rearward operation may be used as a threshold value for the purpose of simplification of the processing.

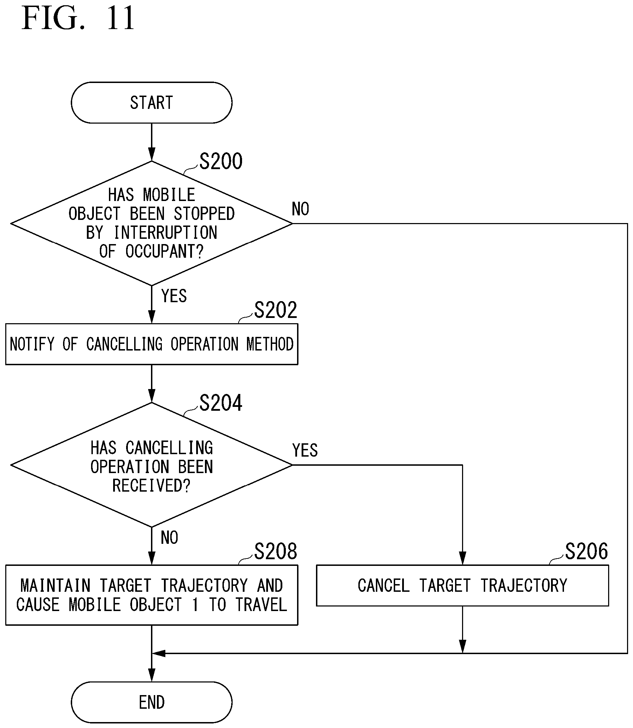

FIG. 11 is a diagram illustrating another example of the process flow that is performed by the control device 100. The process flow illustrated in FIG. 11 is repeatedly performed when a target trajectory with one direction of rightward and leftward as a traveling direction to which a change is to be made is generated on the basis of the operation of the occupant P on the first operator OP1 and the mobile object 1 is traveling along the target trajectory.

First, the control device 100 determines whether the mobile object 1 has been stopped by interruption of an occupant while the mobile object 1 is traveling along the target trajectory with one direction of rightward and leftward as a traveling direction to which a change is to be made (Step S200). When it is determined that the mobile object 1 has not been stopped by interruption of the occupant, the control device 100 ends the process flow in the flowchart. When the mobile object 1 has been rapidly decelerated or when the speed of the mobile object 1 has become equal to or less than a predetermined value which is an extremely low speed through the deceleration as well as when the mobile object 1 has been completely stopped (the speed is 0), the determination may also be performed such that the same result as when the mobile object has been completely stopped is obtained.

On the other hand, when it is determined that the mobile object 1 has been stopped by interruption of the occupant, the control device 100 causes the notification device to notify of a method for a cancelling operation (Step S202). Then, the control device 100 determines whether a cancelling operation of the occupant P has been received (Step S204). When it is determined that a cancelling operation of the occupant P has been received, the control device 100 cancels the target trajectory along which the mobile object is traveling (Step S206). On the other hand, when it is determined that a cancelling operation of the occupant P has not been received, the control device 100 maintains the target trajectory along which the mobile object is traveling and causes the mobile object 1 to travel along the target trajectory (Step S208). As a result, the process flow in the flowchart ends.

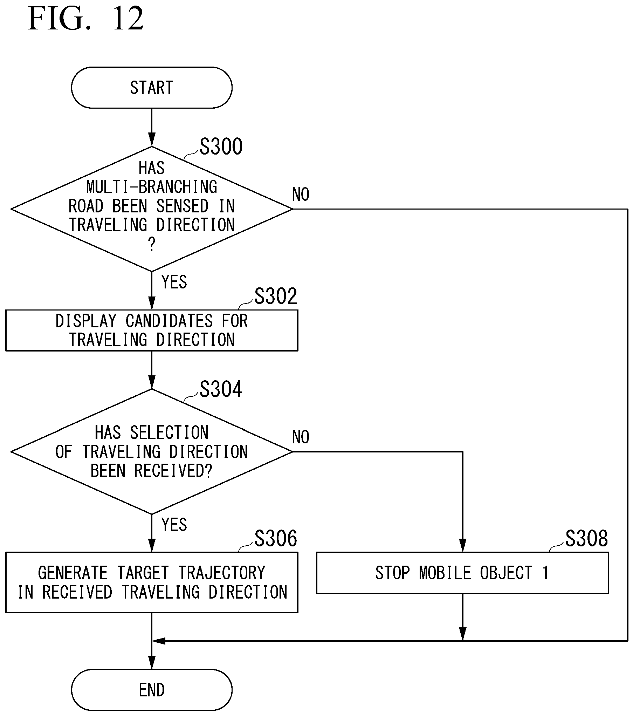

FIG. 12 is a diagram illustrating another example of the process flow that is performed by the control device 100. The process flow illustrated in FIG. 12 is repeatedly performed when the mobile object 1 is traveling.

First, the control device 100 determines whether a multi-branching road in the traveling direction of the mobile object 1 has been sensed by the external camera of the external sensing device 10 (Step S300). When it is determined that a multi-branching road in the traveling direction of the mobile object 1 has not been sensed, the control device 100 ends the process flow in the flowchart.

On the other hand, when it is determined that a multi-branching road in the traveling direction of the mobile object 1 has been sensed, the control device 100 displays a plurality of candidates for the traveling direction in the multi-branching road on the HMI 30 (Step S302). Then, the control device 100 determines whether selection of a candidate for the traveling direction has been received from the occupant P via the HMI 30 (Step S304). When it is determined that selection of a candidate for the traveling direction has been received from the occupant P via the HMI 30, the control device 100 generates a target trajectory in the received traveling direction and causes the mobile object 1 to travel along the target trajectory (Step S306). On the other hand, when it is determined that selection of a candidate for the traveling direction has not been received from the occupant P via the HMI 30, the control device 100 stops the mobile object 1 (Step S308). As a result, the process flow in the flowchart ends.

According to the aforementioned first embodiment, when an occupant of a mobile object operates the first operator OP1 in a predetermined direction, the control device determines the traveling direction of the mobile object, generates a target trajectory in the determined traveling direction, and causes the mobile object to travel automatically along the generated target trajectory. Accordingly, it is possible to change the traveling direction of the mobile object with a simple operation.

### <Second embodiment>

A second embodiment will be described below. In the first embodiment, a mobile object with one seat has been described. On the other hand, a mobile object according to the second embodiment includes two seats which are arranged in a direction crossing a traveling direction of the mobile object, and an armrest provided with a first operator OP1 is provided between the two seats.

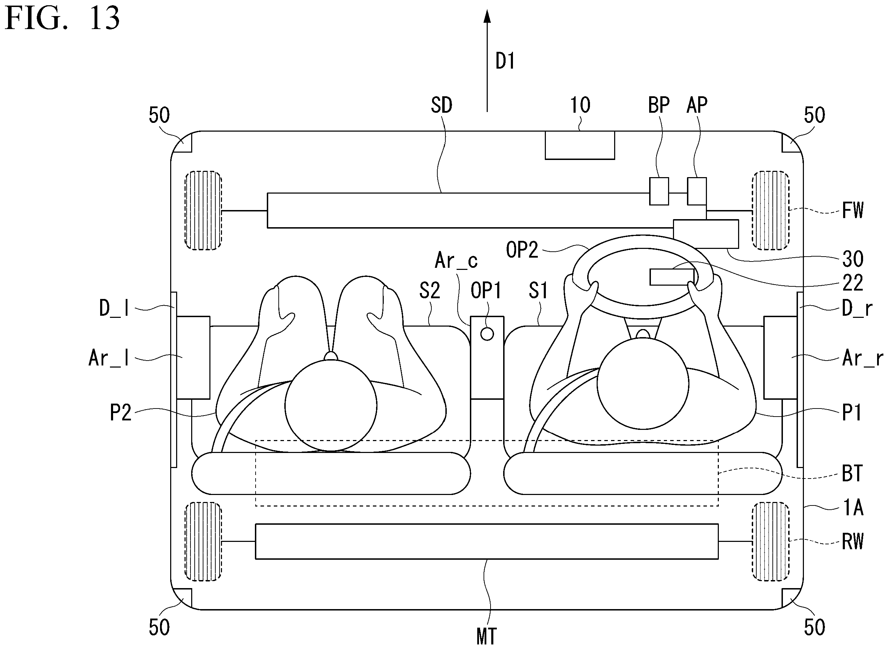

FIG. 13 is a perspective view of a mobile object 1A according to the second embodiment when seen from above. In this drawing, some reference signs which are not essential out of the reference signs illustrated in FIG. 2 are omitted. The mobile object 1A includes two seats S1 and S2 and includes a central armrest Ar_c therebetween. The first operator OP1 is provided in the central armrest Ar_c. In the drawing, the central armrest Ar_c is illustrated as a unified body shared by occupants P1 and P2, but the central armrest Ar_c may be divided into a part for the occupant P1 and a part for the occupant P2. In this case, the first operator OP1 is provided in the part for the occupant P1 in the central armrest Ar_c.

According to the aforementioned second embodiment, the same advantageous effects as in the first embodiment can be achieved. The second embodiment is also the same as the first embodiment in that the first operator OP1 is provided at a position not interfering with getting-in/off of an occupant and thus getting-in/off of an occupant is not hindered.

While an embodiment of the present invention has been described above, the present invention is not limited to the embodiment and can be subjected to various modifications and substitutions without departing from the gist of the present invention.

### REFERENCE SIGNS LIST

1 External sensing device
40 Drive device
100 Control device
120 Recognition unit
130 Target trajectory generating unit
140 Drive control unit
OP1 First operator
OP2 Second operator
Ar_l Left armrest
Ar_r Right armrest
Ar_c central armrest
D_l Left door
D_r Right door

## Claims

1. A mobile object which an occupant is able to get in, the mobile object comprising:
a drive device configured to move the mobile object;
a sensing device configured to sense a situation in at least a traveling direction of the mobile object;
an operator provided in an armrest of the mobile object, capable of being operated at least to right and left, and used for the occupant to indicate the traveling direction of the mobile object; and
a control device configured to cause the mobile object to travel in a mode in which acceleration/deceleration and steering are automatically performed, the control device automatically generating a target trajectory for changing the traveling direction of the mobile object on the basis of the sensed situation in the traveling direction in accordance with an operation of indicating the traveling direction performed on the operator and controlling the drive device such that the mobile object moves along the target trajectory.

2. The mobile object according to claim 1, wherein the control device generates the target trajectory with a first direction as the traveling direction to which a change is to be made when an operating direction of the operator is the first direction which is one of right and left, and
wherein the control device cancels change of the traveling direction when the operator is operated in a direction different from the first direction after the first direction has been determined as the traveling direction to which a change is to be made.

3. The mobile object according to claim 2, wherein the control device generates the target trajectory with a first direction as the traveling direction to which a change is to be made when the operator has been operated in the first direction which is one of right and left in a first period of time or longer,
wherein the control device cancels change of the traveling direction when the operator is operated in a direction different from the first direction in a second period of time or longer after the first direction has been determined as the traveling direction to which a change is to be made, and
wherein the second period is longer than the first period.

4. The mobile object according to claim 2, wherein the operator is able to be additionally operated at least rearward,
wherein the control device generates the target trajectory with a first direction as the traveling direction to which a change is to be made when the operator has been operated in the first direction in a first period of time or longer,
wherein the control device cancels change of the traveling direction when the operator is operated rearward in a third period of time or longer or the operator is operated in a direction other than the first direction and the rearward direction in a second period of time or longer after the first direction has been determined as the traveling direction to which a change is to be made, and
wherein the third period is shorter than the second period.

5. The mobile object according to claim 1, wherein the mobile object includes a notification device configured to notify the occupant, and
wherein the control device causes the notification device to output a notification indicating that an operation on the operator has been received when the operation has been received.

6. The mobile object according to claim 1, wherein the control device maintains an instruction to change the traveling direction when the mobile object is stopped or a speed of the mobile object becomes equal to or lower than a predetermined value with interruption of the occupant while the mobile object is moving along the target trajectory.

7. The mobile object according to claim 1, wherein the mobile object includes a notification device configured to notify the occupant, and
wherein the control device causes the notification device to notify the occupant that an operation of cancelling an instruction to change the traveling direction is to be performed when the mobile object stops due to interruption of the occupant while the mobile object is moving along the target trajectory.

8. The mobile object according to claim 1, wherein the control device determines one of a plurality of course change destination candidates as the traveling direction to which a change is to be made by receiving a plurality of operations on the operator when the plurality of course change destination candidates have been sensed in the traveling direction of the mobile object by the sensing device.

9. The mobile object according to claim 1, wherein the control device determines one of a plurality of course change destination candidates as the traveling direction to which a change is to be made by detecting one or more of a traveling history, speech, a sight line, and a gesture of the occupant when the plurality of course change destination candidates have been sensed in the traveling direction of the mobile object by the sensing device.

10. The mobile object according to claim 8, wherein the mobile object includes a display device configured to display information on traveling of the mobile object, and wherein the control device causes the display device to display one of the plurality of course change destination candidates which is determined as the traveling direction to which a change is to be made.

11. A control method that is performed by a control device for a mobile object, the control device including a drive device configured to move the mobile object which an occupant is able to get in, a sensing device configured to sense a situation in at least a traveling direction of the mobile object, an operator provided in an armrest of the mobile object, capable of being operated at least to right and left, and used for the occupant to indicate the traveling direction of the mobile object, and a control device configured to cause the mobile object to travel in a mode in which acceleration/deceleration and steering are automatically performed, the control method comprising:
automatically generating a target trajectory for changing the traveling direction of the mobile object on the basis of the sensed situation in the traveling direction in accordance with an operation of indicating the traveling direction performed on the operator; and
controlling the drive device such that the mobile object moves along the target trajectory.

12. A program that is executed by a control device for a mobile object, the control device including a drive device configured to move the mobile object which an occupant is able to get in, a sensing device configured to sense a situation in at least a traveling direction of the mobile object, an operator provided in an armrest of the mobile object, capable of being operated at least to right and left, and used for the occupant to indicate the traveling direction of the mobile object, and a control device configured to cause the mobile object to travel in a mode in which acceleration/deceleration and steering are automatically performed, the program causing the control device to perform:
automatically generating a target trajectory for changing the traveling direction of the mobile object on the basis of the sensed situation in the traveling direction in accordance with an operation of indicating the traveling direction performed on the operator; and
controlling the drive device such that the mobile object moves along the target trajectory.
